# EUROPÄISCHE PATENTSCHRIFT

(11) **EP 0 611 711 B1**
(45) Veröffentlichungstag und Bekanntmachung des Hinweises auf die Patenterteilung: **04.06.1997**
(21) Anmeldenummer: 94101514.1
(22) Anmeldetag: 02.02.1994
(51) Int. Cl.: B65G 21/06, F16B 7/04

(54) **Transporteur sowie Verbindungsstück zur Verwendung bei einem derartigen Transporteur**
Conveyor and connecting piece for use with such a conveyor
Transporteur et pièce de raccord destinée à être utilisée pour un tel transporteur

(30) Priorität: 16.02.1993 DE 4304555
(43) Veröffentlichungstag der Anmeldung: 24.08.1994
(73) Patentinhaber: KHS Maschinen- und Anlagenbau Aktiengesellschaft, D-44143 Dortmund (DE)
(72) Erfinder: Lönnig, Manfred, D-55543 Bad Kreuznach (DE)

(56) Entgegenhaltungen:
- DE-U- 9 112 616
- FR-A- 937 003
- US-A- 2 253 761
- US-A- 4 007 993

## Beschreibung

Die Erfindung bezieht sich auf einen Transporteur für Flaschen oder dergl. Behälter gemäß Oberbegriff Patentanspruch 1 sowie auf ein Verbindungsstück zur Verwendung bei einem solchen Transporteur gemäß Oberbegriff Patentanspruch 15.

Bekannt ist eine Fördereinrichtung bzw. ein Transporteur (DE-PS 33 48 062), der an einem sich in Förderrichtung dieses Transporteurs erstreckenden Rahmen ein Transportband sowie mehrere Füße aufweist, mit denen der Rahmen in einem vorgegebenen Abstand über einem Boden angeordnet ist. Die Füße bestehen aus Längen eines Vierkant-Hohlprofils, welches für jeden Fuß jeweils zwei vertikale Fußelemente bildet, die durch zwei horizontale Querstreben miteinander verbunden sind. Jeder rahmenartige Fuß ist mittels zweier Befestigungslaschen am Rahmen des Transportelementes befestigt, und zwar derart, daß um eine senkrecht zur Transportrichtung verlaufende horizontale Achse zum Ausrichten des jeweiligen Fußes dieser um einen kleinen Winkelbetrag schwenkbar ist. Die Verbindungen der Profillängen zu dem jeweiligen Fuß, aber auch die Verbindung jedes Fußes mit dem Rahmen des Transporteurs sind relativ aufwendig.

Bekannt ist weiterhin ein Transporteur, der einen Rahmen sowie von Profillängen gebildete Standfüße aufweist. Letztere sind jeweils über ein Verbindungselement an einem sich in Längsrichtung des Transporteurs erstreckenden, von einer Profillänge gebildeten Längsträger gehalten. Die Verbindungselemente bestehen hierbei im wesentlichen jeweils aus einer Länge eines U-Profils, an welchem die senkrecht zueinander liegenden, den Längsträger und den Fuß bildenden Profillängen durch Festklemmen gehalten sind, und zwar unter Verwendung von bügel- oder U-förmigen Halteschellen, die zusammen mit benachbarten Flächen des U-Profils schellenartige Klemmabschnitte bilden. Zum Verspannen ist jede Halteschelle an ihren beiden Enden mit einem Gewinde und mit einer Mutter versehen. Durch Festziehen der Muttern ist die von der betreffenden Halteschelle umschlossene Profillänge am U-Profil des jeweiligen Verbindungsstücks verspannt und klemmend gehalten. Die bekannten Verbindungsstücke besitzen relativ große Abmessungen und erfordern eine aufwendige Herstellung. Insbesondere ist auch die Montage der bekannten Verbindungsstücke umständlich, und zwar allein schon deswegen, weil zum Verbinden zweier Profillängen über ein solches Verbindungsstück die beiden bügelartigen Befestigungsschellen jeweils durch zwei im U-Profil vorgesehene Bohrungen hindurchgeführt, im Anschluß daran auf jedes Ende eines Befestigungsbügels jeweils eine Mutter aufgeschraubt und schließlich mehrere Muttern festgezogen werden müssen, die sich an verschiedenen Seiten des Profilstückes befinden und von denen ein Teil aus diesem Grunde oftmals schwer zugänglich ist.

Sind für die Lagerung und/oder die Versendung nur kleine Abmessungen für den bekannten Transporteur erwünscht, so ist es erforderlich, durch Lösen der Verbindungsstücke die Füße abzunehmen. Dies bedeutet auf jeden Fall beim Aufstellen des Transporteurs am Verwendungsort einen zusätzlichen Montageaufwand.

Durch die Entgegenhaltung US-A-2 253 761 (D1) ist ein Transporteur für Behälter bekannt, mit einem einen Rahmen und ein Transportband aufweisenden Transportelement, mit am Rahmen vorgesehenen Füßen sowie mit die Füße mit dem Rahmen verbindenden Verbindungsstücken, an denen die Füße befestigt sind und die unter Verwendung von Spannmitteln mit Klemmabschnitten durch Festklemmen jeweils an einer Länge eines Metall-Profils des Rahmens durch Festklemmen gehalten sind, so daß die Füße über eine Unterseite des Rahmens wegstehen, wobei der Rahmen im Bereich der Füße jeweils ein von der Profillänge gebildetes und senkrecht zur Längserstreckung des Transporteurs angeordnetes Querstück, an dem das jeweilige Verbindungsstück derart angreift, daß nach dem Lösen der Spannmittel der betreffende Fuß um die Achse des Querstücks schwenkbar ist.

Durch US-A-4 007 993 (D2) ist ein Verbindungsstück für die Verbindung zweier Profillängen bekannt, wobei am zweiteiligen Verbindungsstück Spannmittel zum Verspannen seiner Teile an den Profillängen und zwei schalenartige Klemmabschnitte vorgesehen sind, die sich gegeneinander senkrecht erstrecken.

Aufgabe der Erfindung ist es, einen Transporteur aufzuzeigen, der bei ausreichender Festigkeit möglichst einfach, kostengünstig und auch montagefreundlich herstellbar ist, insbesondere auch derart, daß durch eine einfache Schwenkverstellung der Füße ein universeller Einsatz des Transporteurs, auch durch eine Anpassung an unterschiedliche Gegebenheiten am Aufstellungsort des Transporteurs möglich ist.

Aufgabe der Erfindung ist es weiterhin auch, ein Verbindungsstück für eine Klemmbefestigung aufzuzeigen, welches bei komptakter Ausbildung preiswert hergestellt werden kann und mit welchem Verbindungen zwischen den Rahmen und/oder die Füße eines Transporteurs bildenden Profillängen einfach, problemlos und montagefreundlich realisierbar sind.

Zur Lösung dieser Aufgabe ist ein Transporteur entsprechend dem kennzeichnenden Teil des Patentanspruches 1 bzw. ein Verbindungsstück entsprechend dem kennzeichnenden Teil des Patentanspruches 19 ausgebildet.

Der erfindungsgemäße Transporteur zeichnet sich u.a. durch eine einfache und kostengünstige Konstruktion, insbesondere auch in bezug auf die Befestigung und Schwenkverstellung der Füße am Rahmen aus. Durch die Schwenkverstellung kann die Lage der Füße relativ zum Rahmen in einem großen Winkelbereich eingestellt und beispielsweise an örtliche Gegebenheiten am Aufstellungsort des Transporteurs angepaßt werden, wodurch sich ein universeller und anpassungsfähiger Einsatz des Transporteurs ergibt.

Grundsätzlich ist es möglich, diese Schwenkverstellung so auszubilden, daß die Füße zwischen einer Gebrauchsstellung, in der sie in der für die Verwendung bzw. für den Gebrauchszustand des Transporteurs notwendigen Weise über die Unterseite des Rahmens wegstehen, und einer Nichtgebrauchsstellung schwenkbar sind, in der die Füße der Unterseite des Rahmens benachbart liegen. Die Füße können damit im Nicht-Gebrauchszustand des Transporteurs, d.h. für die Lagerung und/oder Versendung auf die Unterseite des Rahmens geklappt werden, womit für die Lagerung und/oder Versendung über den Transporteur oder den Rahmen nach unten wegstehende Füße vermieden sind.

Der erfindungsgemäße Transporteur zeichnet sich weiterhin durch eine besonders einfache Ausgestaltung, preiswerte Fertigung und leichte Montierbarkeit mit Hilfe der vorzugsweise zweiteilig ausgebildeten Verbindungsstücke aus. Diese stellen eine feste und zuverlässige Klemmverbindung zwischen den rechtwinklig aneinander anschließenden Profillängen sicher, können preiswert gefertigt werden und sind einfach montierbar.

Bei einer bevorzugten Ausführungsform weist das Profil, aus dem die Profillängen hergestellt sind, einen kreisförmigen Außenquerschnitt auf, d.h. dieses Profil ist ein Rohrprofil. Dementsprechend sind auch die konkaven, schalenartigen Klemmabschnitte der beiden Teile des Verbindungsstücks kreisbogenförmig gekrümmt.

Durch die schalenartigen Klemmabschnitte der beiden, miteinander verbundenen Teile des jeweiligen Verbindungsstücks werden nicht nur die miteinander zu verbindenden Profillängen schellenartig umfaßt und am Verbindungsstück durch Verspannen dieser Teile gehalten, sondern durch die schalenartigen Klemmabschnitte bzw. durch die von diesen Klemmabschnitten gebildete Profilierung besitzen die beiden Teile des Verbindungsstücks auch eine hohe Steifigkeit.

Bevorzugt sind bei einer zweiteiligen Ausbildung der Verbindungsstücke die beiden Teile schwenkbar miteinander verbunden, und zwar vorzugsweise lösbar durch formschlüssig ineinandergreifende Verbindungsmittel. Durch diese schwenkbare Verbindung ist eine besonders einfache Montage möglich.

Die Verbindungsmittel sind bevorzugt dadurch gebildet, daß wenigstens ein Randbereich an einem Teil einen Randbereich oder Ansatz am anderen Teil des Verbindungsstücks übergreift.

Durch Verwendung der Verbindungsstücke und Profillängen lassen sich unterschiedlichste Ausgestaltungen von Transporteuren mit zugehörigen Füßen realisieren, insbesondere auch solche, bei denen der Transporteur auf gleichem und/oder unterschiedlichem Niveau mehrere jeweils von wenigstens einem Rahmen und wenigstens einem Transportband gebildete Transportelemente aufweist.

Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: in vereinfachter Darstellung und im Längsschnitt den Rahmen eines Transporteurs, zusammen mit einem der Füße dieses Transporteurs;
- Fig. 2 und 3: jeweils in einer Darstellung wie Fig. 1 einen Tansporteur mit größerer Förderbreite;
- Fig. 4: in Teildarstellung und in Seitenansicht den Transporteur der Fig. 1 oder Fig. 2;
- Fig. 5 und 6: in Seitendarstellung und in Draufsicht ein Verbindungsstück zur Verwendung bei den Transporteueren der Figuren 1 - 4;
- Fig. 7 - 11: in Darstellungen ähnlich den Figuren 1 - 3 verschiedene weitere Ausführungsformen des erfindungsgemäßen Transporteurs.

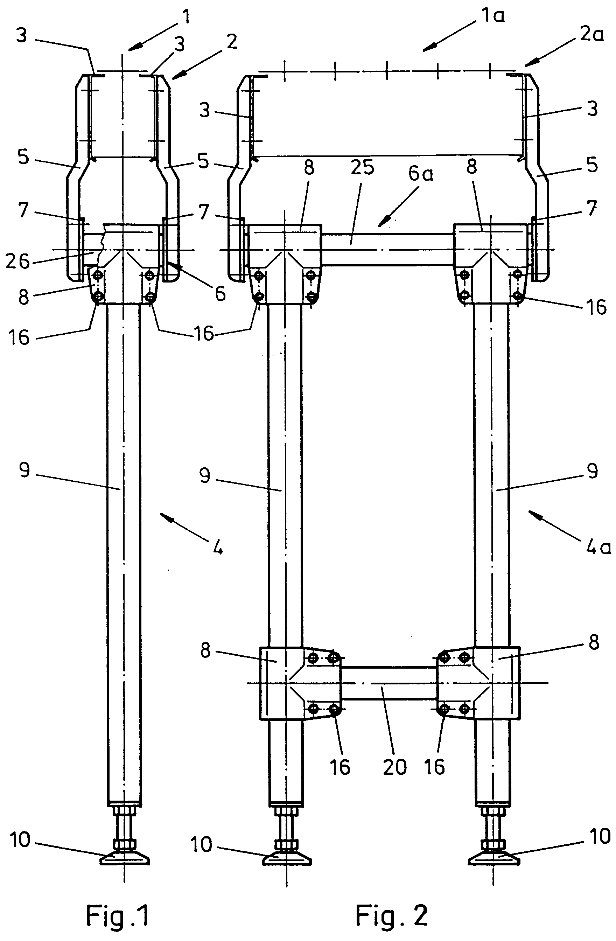

Der in der Fig. 1 dargestellt Transporteur 1 besteht im wesentlichen aus einem Rahmen 2, der sich in Längsrichtung des Transporteurs erstreckt und in dieser Figur nur sehr schematisch dargestellt ist. Der Rahmen 2 bzw. dessen Rahmenelemente 3, die bei der dargestellten Ausführungsform Längen eines C-Profils sind, bilden nicht nur den sich in Längsrichtung des Transporteurs erstreckenden tragenden Teil dieses Transporteurs, sondern am Rahmen 2 bzw. an den Rahmenelementen 3 ist auch das nicht dargestellte Transportband (Scharnierbandkette) geführt und die ebenfalls nicht dargestellten Führungsgeländer sowie die nicht dargestellten Umlenkrollen, Antriebe, usw. vorgesehen.

An vorgegebenen Bereichen ist an der Unterseite des Rahmens 2 ein Fuß 4 vorgesehen. Mit diesen Füßen sind der Rahmen 2 bzw. der Transporteur 1 in dem erforderlichen Abstand über einem Boden gehalten. Dort, wo ein Fuß 4 vorgesehen ist, weist der Rahmen 2 an beiden Längsseiten jeweils eine Befestigungslasche 5 auf, die mit ihrem oberen Ende an einem die betreffende Längsseite des Rahmens 2 bestimmenden Rahmenelement 3 angeschraubt oder auf andere, geeignete Weise befestigt ist und mit ihrem unteren Ende über die Rahmenelemente 3 nach unten vorsteht. An den unteren Enden ist zwischen den Befestigungslaschen 5 ein horizontales, senkrecht zu diesen Laschen sich erstreckendes Querstück 6 vorgesehen, welches beidendig jeweils an einer Befestigungslasche 5 befestigt ist. Bei der dargestellten Ausführungsform besteht dieses Querstück 6 aus einer Länge 26 eine Rohrprofiles, welche beidendig jeweils mit einem Befestigungsflansch 7 versehen und mit diesem Flansch an der betreffenden Befestigungslasche 5 angeschraubt ist.

Am Querstück 6, welches ebenso wie die Befestigungslaschen 5 Bestandteil des Rahmens 2 ist, ist mittels eines Verbindungsstücks 8 das obere Ende eines säulenartigen Fußelementes 9 befestigt, welches von einer Länge des Rohrprofils gebildet ist und an seinem unteren Ende ein in der Höhe verstellbares, aus einer Spindel und einer Fußplatte bestehendes Standelement 10 aufweist, mit dem der Fuß 4 auf dem Untergrund aufsteht.

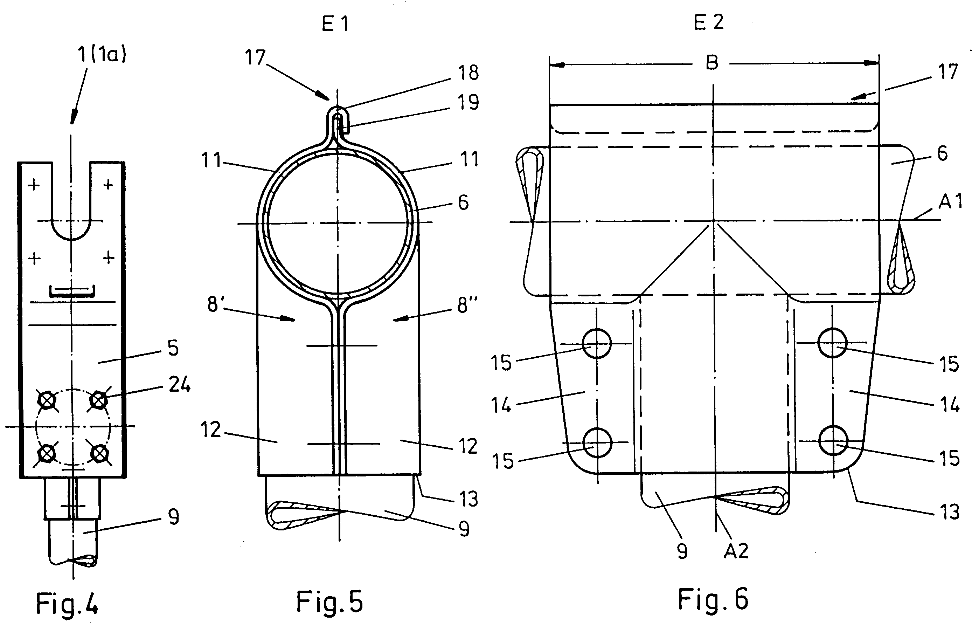

Wie insbesondere die Figuren 5 und 6 zeigen, besteht das Verbindungsstück 8 aus zwei Teilen 8' und 8'', die jeweils aus Edelstahlblech durch Stanzen und Ziehen bzw. Drücken geformt sind, und zwar derart, daß die miteinander verbundenen Teile 8' und 8'' im wesentlichen symmetrisch zu einer die Trennfläche zwischen diesen Teilen bildenden Ebene E1 ausgebildet und angeordnet sind (Fig. 5) und darüberhinaus jedes Teil 8' bzw. 8'' auch symmetrisch zu einer Ebene E2 geformt ist, die die Ebene E1 sowie die Achse des Querstücks 6 rechtwinklig schneidet.

Im einzelnen ist dieses Teil derart geformt, daß es in seinem in den Figuren 5 und 6 oberen Bereich einen rohrschellenoder schalenartigen, halbkreisförmigen Klemmabschnitt 11 bildet, der sich in Richtung der ersten, senkrecht zur Ebene E2 und in der Ebene E1 liegenden Achse A1 über die gesamte Breite B des Verbindungsstücks 8 erstreckt. Weiterhin bildet jedes Teil 8' und 8'' einen zweiten rohrschellen- oder schalenartigen, halbkreisförmigen Klemmabschnitt 12, dessen Achse A2 senkrecht zur Achse A1 liegt und durch die Gerade bestimmt ist, an der sich die beiden Ebenen E1 und E2 schneiden. Bei jedem Teil 8' bzw. 8'' mündet der Klemmabschnitt 12 in den Klemmabschnitt 11, und zwar in der Mitte des VerbindungsStücks 8, und reicht bis zu dem in den Figuren 5 und 6 unteren Rand 13 des Verbindungsstücks 8 bzw. der Teile 8' und 8''.

Beidseitig von dem Klemmabschnitt 12 weist jedes Teil 8' bzw. 8'' einen flachen Flansch 14 auf. Jeder Flansch 14 ist mit zwei in Richtung der Achse A2 gegeneinander versetzten Bohrungen 15 versehen. Durch die Bohrungen 15 in den Teilen 8' und 8'' durchgreifende Schrauben 16 mit Muttern sind diese Teile im Bereich der Flansche 14, d.h. beidseitig von den Klemmabschnitten 12 miteinander verbindbar. Im Bereich des in den Figuren 5 und 6 oberen, dem Rand 13 gegenüberliegenden Rand 17 sind die Teile 8' und 8'' dadurch formschlüssig miteinander verbindbar, daß ein C-förmig oder U-förmig gebogener Randbereich 18 am Teil 8', der sich über die gesamte Breite B des Verbindungsstücks 8 entlang des Randes 17 erstreckt, eine leistenartige, sich ebenfalls über die gesamte Breite B erstreckende und im wesentlichen in der Ebene E1 liegende Abwinklung 19 des Teiles 8'' formschlüssig übergreift.

Bei miteinander verbundenen Teile 8' und 8'' weist also das Verbindungsstück 8 im wesentlichen zylinderförmige Ausnehmungen auf, von denen eine von den beiden Klemmabschnitten 11 gebildet ist und sich über die gesamte Breite B in Richtung der Achse A1 erstreckt und von denen die andere von den beiden Klemmabschnitten 12 gebildet ist und sich in Richtung der Achse A1 von dem unteren Rand 13 bis in die von den Abschnitten 12 gebildete Ausnehmung erstreckt. Die Klemmabschnitte 11 und 12 an den einander zugewandten Innenseiten der verbundenen Teile 8' und 8'' jeweils konkav ausgebildet.

Das Verbindungsstück 8 ist bei dem Transporteur 1 derart montiert, daß es mit seinen Klemmabschnitten 11 das Querstück 6 und mit seinen Klemmabschnitten 12 das obere Ende des Fußelementes 9 umschließt. Die Krümmungsradien der Klemmabschnitte 11 und 12 sind nicht nur gleich, sondern an den Außendurchmesser, den das für die Herstellung des Querstücks 6 und die Herstellung des Fußelementes 9 verwendete Rohrprofil aufweist, so angepaßt, daß bei am oberen Rand 17 formschlüssig miteinander verbundenen Teilen 8' und 8''und nach dem Festziehen der Schrauben 16 das Verbindungsstück 8 durch Klemmsitz auf dem Querstück 6 und das Fußelement 9 durch Klemmsitz im Verbindungsstück 8 gehalten sind.

Das Verbindungsstück 8 zeichnet sich bei der Möglichkeit einer preiswerten Herstellung u.a. auch durch eine einfache Montage sowie durch eine wirksame und zuverlässige Verbindung des Fußelementes 9 mit dem Querstück 6 des Rahmens 2 aus. Ein weiterer Vorteil besteht auch darin, daß beispielsweise bei einem Lockern derjenigen Schrauben 16, die in den der Achse A1 unmittelbar benachbarten Bohrungen 15 vorgesehen sind, die Klemmung des Verbindungsstücks 8 am Querstück 6 soweit aufgehoben werden kann, daß der Fuß 4 um die Achse A1 geschwenkt werden kann, d.h. beispielsweise zur Reduzierung des Transportraumes auf den Rahmen 2 derart klappbar ist, daß der Fuß 4 in Richtung des Rahmens 2 liegt, während das obere Ende des Fußelementes 9 noch ausreichend am Verbindungsstück 8 gehalten ist.

Die Fig. 2 zeigt als weitere mögliche Ausführungsform der Erfindung einen Transporteur 1a, der sich vom Transporteur 1 im wesentlichen durch eine größere Förderbreite unterscheidet, d.h. der Rahmen 2a dieses Transporteurs besitzt eine im Vergleich zum Rahmen 2 größere Breite. Anstelle der Fußelemente 4 sind Fußelemente 4a vorgesehen, die jeweils an einem Querstück 6a des Rahmens 2a gehalten sind, und zwar mittels zweier Verbindungsstücke 8.

Das Querstück 6a besteht wiederum aus einer Länge 25 des Rohrprofils und ist beidendig mit einem Befestigungsflansch 7 versehen, mit dem das Querstück an den beiden Befestigungslaschen 5 befestigt ist. Entsprechend der größeren Breite des Transporteurs 1a besitzt auch das Querstück 6a eine größere Länge als das Querstück 6 des Transporteurs 1.

Der Fuß 4a besitzt zwei vertikale Fußelemente 9, die jeweils am unteren Ende ein Standelement 10 aufweisen und durch eine Querstrebe 20 miteinander verbunden sind. Die Querstrebe 20, die ebenfalls aus einer Länge des Rohrprofils besteht, ist mit den Enden über ein Verbindungsstück 8 mit jeweils einem Fußelement 9 verbunden und parallel zur Achse des Querstücks 6a angeordnet. Die Verbindungsstücke 8 für die Querstrebe 20 umschließen mit ihren Klemmabschnitten 11 das jeweilige Fußelement 9 und mit ihren Klemmabschnitten 12 die Querstrebe 20.

Auch beim Transporteur 1a ist jeder Fuß 4a wiederum um das Querstück 6a schwenkbar.

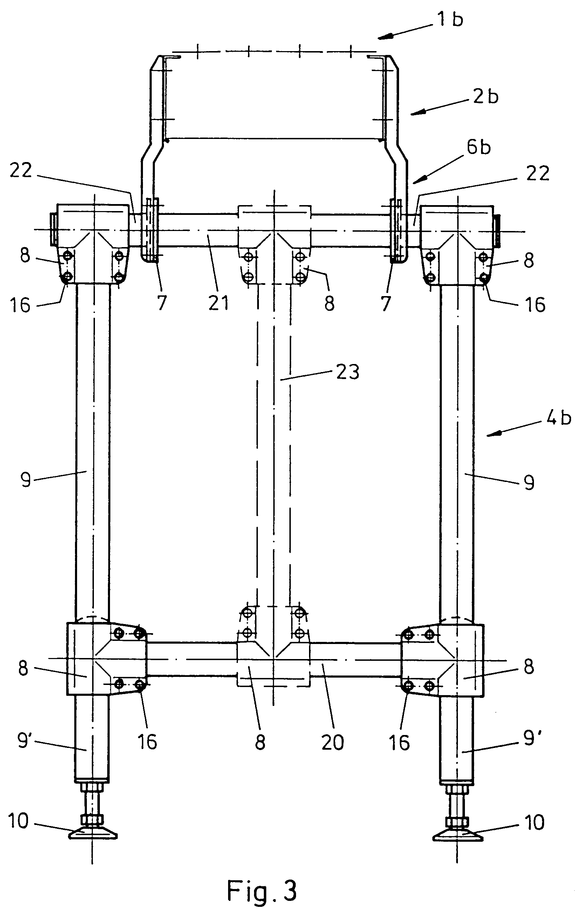

Fig. 3 zeigt als weitere mögliche Ausführungsform der Erfindung einen Transporteur 1b, dessen Förderbreite zwischen der der Transporteure 1 und 1a liegt. Am Rahmen 2b sind über die Befestigungslaschen 5 Querstücke 6b dort gehalten, wo Füße 4b vorgesehen sind. Das jeweilige Querstück 6b ist bei dieser Ausführung von insgesamt drei Längen des Rohrprofils gebildet, und zwar von einer mittleren Länge 21, die sich zwischen den beiden Befestigungslaschen 5 erstreckt, sowie aus den beiden äußeren Längen 22, die jeweils über die Außenseite der zugehörigen Befestigungslasche 5 wegstehen. Die Länge 21 ist beidendig jeweils mit einem Befestigungsflansch 7 versehen. Weiterhin weisen die Längen 22 an ihren innenliegenden Enden ebenfalls den Befestigungsflansch 7 auf. Mit den Befestigungsflanschen 7 sind diese Längen 21 und 22 an den Befestigungslaschen 5 befestigt und derart miteinander verbunden, daß die Längen 21 und 22 achsgleich miteinander liegen.

Auf den nach außen wegstehenden Längen 22, d.h. auf den nach außen wegstehenden Abschnitten des Querstücks 6b ist jeweils ein Verbindungsstück 8 vorgesehen, und zwar in gleicher Weise wie das Verbindungsstück 8 an dem Querstück 6a. Jedes Verbindungsstück 8 umschließt mit seinen Klemmabschnitten 12 das obere Ende eines Fußelementes 9 des Fußes 4b, der hinsichtlich seiner Ausgestaltung dem Fuß 4a entspricht und ebenfalls die Querstrebe 20 aufweist.

Wie in der Fig. 3 mit unterbrochenen Linien dargestellt ist, kann der Fuß 4b auch so ausgeführt werden, daß anstelle der Fußelemente 9, die von dem jeweiligen Standelement 10 bis an das Querstück 6b reichen, nur jeweils stark verkürzte Fußelemente 9' verwendet sind, die nur bis an diejenigen Verbindungsstücke 8 reichen, über die die Querstrebe 20 angeschlossen ist. Mittels eines weiteren Verbindungsstücks 8, welches mit seinen Klemmabschnitten 11 die Querstrebe 20 umschließt, ist das untere Ende eines säulenartigen Fußelementes 23 an der Querstrebe 20 gehalten, und zwar durch die dieses untere Ende umschließenden Klemmabschnitte 12 des dortigen Verbindungsstücks 8. Das obere Ende des Fußelementes 23, welches wiederum aus einer Länge des Rohrprofils besteht, ist über ein oberes Verbindungsstück 8 am mittleren Teil des Querstücks 6b bzw. an die Länge 21 angeschlossen. Das dortige Verbindungsstück 8 umschließt mit den Klemmabschnitten 11 das Querstück 6b und mit den Klemmabschnitten 12 das obere Ende des Fußelementes 23.

Die vorstehend beschriebene Ausführung mit den im Vergleich zu den Fußelementen 9 stark verkürzten Fußelementen 9' und dem zusätzlichen Fußelement 23 kann selbstverständlich auch bei dem Transporteur 1a verwendet werden.

Abweichend von der vorbeschriebenen Ausführungsform ist es beim Transporteur 1b auch möglich, daß das Querstück 6b von einer durchgehenden Länge des Rohrprofils gebildet ist und mit Abstand von den beiden Enden dieser Länge des Rohrprofils auf diesem jeweils zwei Befestigungsflansche 7 zur Befestigung an den Befestigungslaschen 5 vorgesehen sind. Weiterhin ist es auch möglich, für die mittlere Länge 21 ein Rohrprofil zu wählen, dessen Innendurchmesser so groß gewählt ist, daß eine Länge des Rohrprofils durchgeschoben werden kann, die auch die beiden überstehenden Bereiche (Längen 22) bildet.

Die Fig. 4 zeigt in Seitenansicht einen der Befestigungsflansche 5, zusammen mit einem Fußelement 9 beispielsweise des Fußes 4 oder 4a. In der Fig. 4 sind auch Schrauben 24 dargestellt, mit denen der Befestigungsflansch 7 mit der jeweiligen Befestigungslasche 5 verbunden ist.

Den in den Figuren 1 - 3 dargestellten Ausführungsformen mit den von den Standelementen 10 bis an das jeweilige Querstück 6, 6a bzw. 6b reichenden Fußelementen 9 ist gemeinsam, daß diejenigen Verbindungsstücke 8, an denen die nicht unerheblichen Lasten des Transporteurs auf die Fußelemente 9 übertragen werden, so angeordnet sind, daß sich das obere Ende des jeweiligen Fußelementes 9 innerhalb des Verbindungsstücks 8 an der Außenfläche des Querstücks 6, 6a bzw. 6b abstützt, die Lasten also zum großen Teil bereits durch diese Abstützung und nicht über die Klemmung vom Rahmen 2, 2a bzw. 2b auf die Füße 4, 4a bzw. 4b übertragen werden.

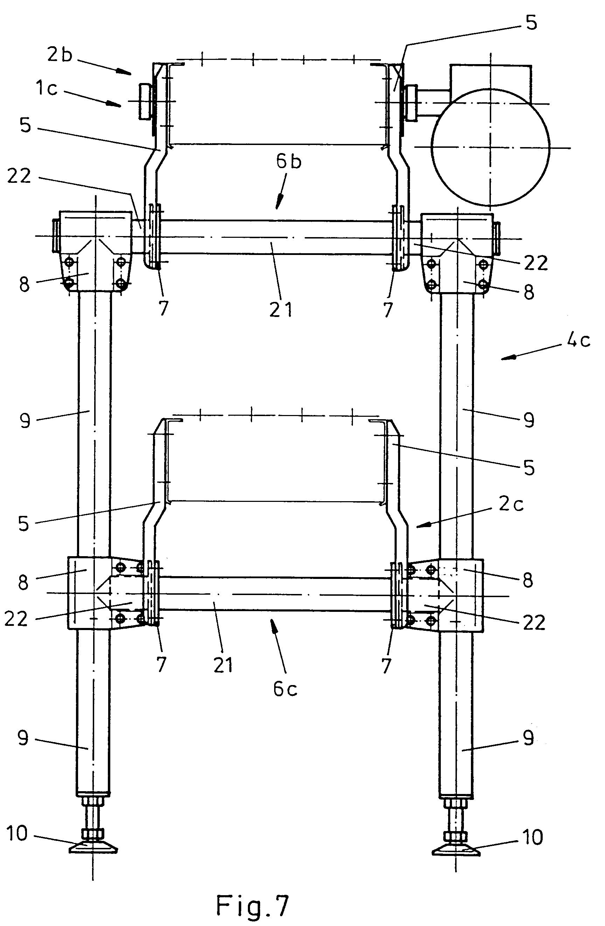

Die Figuren 7 - 11 zeigen, daß unter Verwendung der Verbindungsstücke 8 und entsprechender, zumindet teilweise an einem Ende oder an beiden Enden mit einem Befestigungsflansch 7 versehener Längen des Rohrprofiles die unterschiedlichsten Transporteure auch baukastenartig realisierbar sind.

Der in der Fig. 7 dargestellte Transporteur 1c weist zwei in vertikaler Richtung übereinander angeordnete Transportbänder bzw. Rahmen auf, von denen der obere Rahmen dem Rahmen 2b des Transporteurs 1b entspricht, allerdings bei dem Transporteur 1c eine etwas größere Förderbreite besitzt. Der obere Rahmen 2b weist daher neben den Befestigungslaschen 5 auch ein Querstück auf, welches dem Querstück der Fig. 3 entspricht und somit ebenfalls mit 6b bezeichnet ist. Der untere Rahmen 2c des Transporteurs 1c weist dort, wo das jeweilige Fußelement 4c vorgesehen ist, an den nicht bezeichneten Rahmenelementen wieder die Befestigungslaschen 5 auf, die an ihrem unteren Ende an einem Querstück 6c gehalten sind, welches in gleicher Weise wie das Querstück 6b ausgeführt ist. Das Querstück 6c ist beidendig über jeweils ein Verbindungsstück 8 mit den vertikalen Fußelementen 9 verbunden, und zwar in gleicher Weise wie die Querstrebe 20 bei den Transporteuren 1a und 1b. Das Querstück 6c hat gleichzeitig die Funktion dieser Querstrebe.

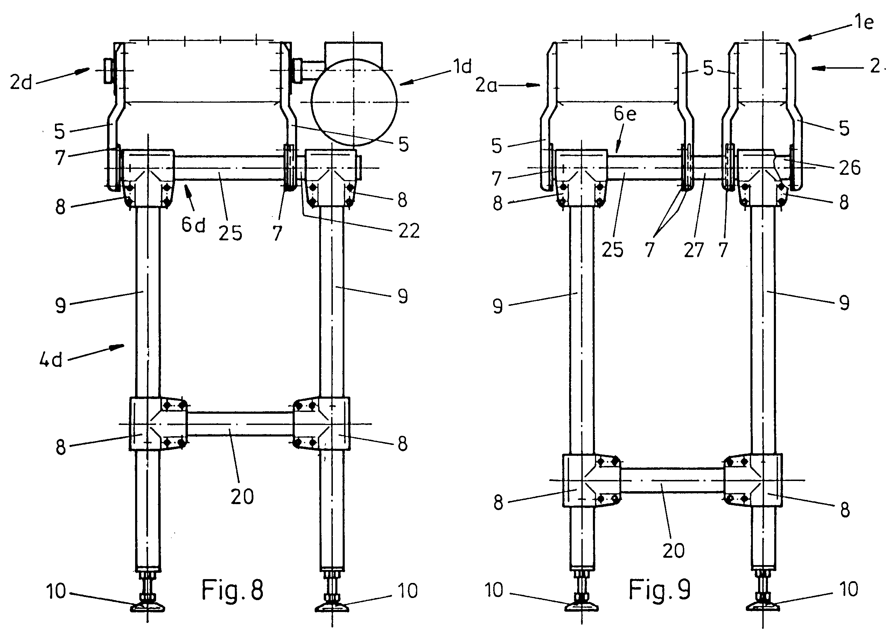

Die Fig. 8 zeigt einen Transporteur 1d mit einem Fußelement 4d. Der Transporteur 1d unterscheidet sich beispielsweise von dem Transporteur 1b im wesentlichen dadurch, daß im Bereich des Fußelementes 4d die unteren Enden der Befestigungslaschen 5 mit einem Querstück 6d verbunden sind, welches auf der in der Fig. 8 rechten Seite des Fußes 4d entsprechend dem Verbindungsstück 6b ausgebildet ist, d.h. über die Außenseite der dortigen Befestigungslasche 5 wegsteht, während das Querstück 6b an der in der Fig. 8 linken Seite des Fußes 4d entsprechend dem Querstück 6a ausgeführt ist, d.h. das Verbindungsstück 8 befindet sich dort an der Innenseite der dortigen Befestigungslasche 5. Im einzelnen setzt sich das Querstück 6d aus einer Länge 25 des Rohrprofils, die (Länge) beidendig mit jeweils einem Befestigungsflansch 7 versehen ist und somit dem Querstück 6a entspricht, sowie aus einer Länge 22 des Rohrprofils zusammen, die nur an einem Ende mit einem Befestigungsflansch 7 versehen ist. Über die Befestigungsflansche 7 und die in der Fig. 8 rechte Befestigungslasche 5 sind die beiden Längen 22 und 25 zu dem Querstück 6d miteinander verbunden.

Die beiden Fußelemente 9 sind wiederum über Verbindungsstücke mit dem Querstück 6d verbunden. Weiterhin weist diese Ausführung auch die die Fußelemente 9 unterhalb des Querstücks 6d miteinander verbindende Querstrebe 20 auf.

Fig. 9 zeigt in vereinfachter Darstellung einen Transporteur 1e, der auf gleichem Niveau parallel zueinander zwei Transportelemente und die zugehörigen Rahmen aufweist. Das in der Fig. 9 linke Transportelement entspricht dem Transportelement des Transporteurs 1a. Der entsprechende Rahmen ist daher mit zwei 2a bezeichnet. Das der Fig. 9 rechte Transportelement entspricht dem des Transporteurs 1. Der Rahmen ist daher mit 2 bezeichnet. Beide Rahmen weisen am Fußelement 4e ein gemeinsames Querstück 6e auf, welches von drei achsgleich miteinander angeordneten und miteinander verbundenen Längen 25, 26 und 27 des Rohrprofils besteht, die (Längen) jeweils beidendig mit einem Befestigungsflansch versehen sind. Die Länge 25 entspricht dabei wiederum dem Querstück 6a und die Länge 26 dem Querstück 6. Die Länge 27 bildet ein Distanzelement, welches für einen vorgegebenen Abstand der beiden Rahmen 2 und 2a bzw. der Transportbänder sorgt. An dem in der Fig. 9 linken Befestigungsflansch 7 ist die linke Befestigungslasche 5 des linken Transportbandes bzw. des Rahmens 2a befestigt. Der rechte Befestigungsflansch 7 der Länge 25 ist über die rechte Befestigungslasche 5 des Rahmens 2a mit dem linken Befestigungsflansch 7 der Länge 27 verbunden. Der rechte Befestigungsflansch dieser Länge ist über die linke Befestigungslasche 5 des Rahmens 2 mit dem linken Befestigungsflansch der Länge 26 verbunden. An dem rechten Befestigungsflansch 7 dieser Länge ist die rechte Befestigungslasche 5 des Rahmens 2 gehalten. Die Verbindungsstücke 8, die das Querstück 6a mit den beiden Fußelementen 9 des Fußes 4e verbinden, sind am Querstück 6e innerhalb der beiden äußeren Befestigungsflansche 7 vorgesehen.

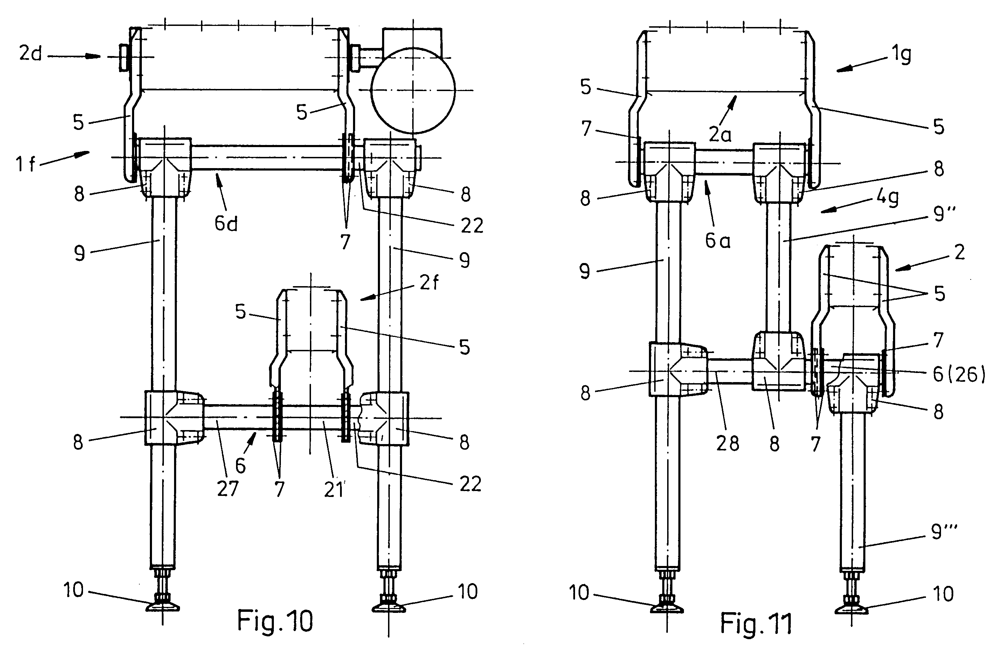

Die Fig. 10 zeigt einen Transporteur 1f, der sich vom Transporteur 1d im wesentlichen nur dadurch unterscheidet, daß unterhalb des den Rahmen 2d aufweisenden Transportelementes ein weiteres Transportelement mit dem Rahmen 2f vorgesehen ist. Hierfür ist anstelle der die Fußelemente 9 verbindenden Querstrebe ein Querstück 6f vorgesehen, welches von einer Länge 27 des Rohrprofils, die an einem Ende den Befestigungsflansch 7 aufweist, von der Länge 21 des Rohrprofils, die beidendig mit einem Befestigungsflansch 7 versehen ist, sowie von der Länge 22 gebildet ist. Die die Befestigungsflansche 7 nicht aufweisenden Enden der Längen 27 und 21 sind jeweils über ein Verbindungsstück 8 mit einem Fußelement 9 verbunden. Die beiden Befestigungsflansche 7 der zwischen den Befestigungslaschen 5 des unteren Transportelementes angeordneten Länge 21 sind mit diesen Befestigungslaschen 5 sowie mit jeweils einem Befestigungsflansch 7 der Länge 27 bzw. 21 verbunden.

Die Fig. 11 zeigt als weitere Ausführung schließlich einen Transporteur 1g mit einem oberen Transportelement, welches entsprechend dem Transportelement des Transporteurs 1a ausgebildet ist und demnach den Rahmen 2a mit dem Querstück 6a aufweist. Gegenüber dem oberen Transportelement tieferliegend ist am Fuß 4g ein weiteres Transportelement vorgesehen, welches dem Transportelement des Transporteurs 1 entspricht und dessen Rahmen daher mit 2 bezeichnet ist.

Im Bereich des Fußes 6g ist am Querstück 6a mittels eines Verbindungsstücks 8 ein Fußelement 9 befestigt, und zwar im Bereich der in der Fig. 11 linken Seite des Rahmens 2a. Mittels eines weiteren Verbindungsstücks 8 ist im Bereich der rechten Seite des oberen Rahmens 2a ein verkürztes Fußelement 9'' befestigt, das mit seinem unteren Ende über ein weiteres Verbindungsstück 8 an eine Querstrebe 28 angeschlossen ist. Diese Querstrebe 28, die mit ihrem in der Fig. 11 linken Ende über ein Verbindungsstück 8 mit dem Fußelement 9 verbunden ist, steht mit ihrem in der Fig. 11 rechten Ende über das an das verkürzte Fußelement 9'' angeschlossene Verbindungselement 8 seitlich vor. Über einen dort vorgesehenen Befestigungsflansch 7 ist seitlich der Rahmen 2 des unteren Transportelementes angeschlossen, und zwar dadurch, daß der eine Befestigungsflansch 7 der das Querstück 6 bildenden Länge 26 über die eine Befestigungslasche 5 mit dem Befestigungsflansch 7 an der Länge 28 verbunden ist. Am Querstück 6 bzw. an der dieses Querstück bildenden Länge 26 ist über ein Verbindungsstück 8 das obere Ende eines weiteren, verkürzten Fußelementes 9''' befestigt. Es versteht sich, daß auch die beiden verkürzten Fußelement 9'' und 9''' sowie die Querstrebe 28 jeweils aus einer Länge des Rohrprofils bestehen.

Die Erfindung wurde voranstehend an einem Ausführungsbeispiel beschrieben. Es versteht sich, daß Abwandlungen möglich sind, ohne daß dadurch der der Erfindung zugrundeliegende Erfindungsgedanke verlassen wird. So können beispielsweise bei den Transporteur 1a der Figur 2 anstelle des Querstücks 6a oder der Länge 25 zwei Längen 22 mit jeweils einem Befestigungsflansch 7 verwendet werden, wobei diese Längen dann mit dem Befestigungsflansch 7 außenliegend an jeweils einer Befestigungslasche 5 befestigt sind und an ihren freien Enden jeweils von einem oberen Verbindungsstück 8 umfaßt werden. Weiterhin ist es auch möglich, beim Transporteur 1b auf die mittlere Länge 21 zu verzichten.

Weiterhin ist es möglich, die die Teile 8' und 8'' aufweisenden Verbindungsstücke 8 einteilig herzustellen, wobei dann vorzugsweise in das Stahlblech am Übergang zwischen den beiden Teilen wenigstens ein Falz eingeformt ist, um den die Teile 8' und 8'' relativ zueinander "schwenkbar" sind.

An einem der Teile 8' und 8'' der Verbindungsstücke können Muttergewindestücke (z. B. Muttern) für die Schrauben 16 vorgesehen sein.

### Bezugszeichenliste

- 1 - 1g: Transporteur
- 2 - 2f: Rahmen
- 3: Rahmenelement
- 4 - 4g: Fuß
- 5: Befestigungslasche
- 6 - 6f: Querstück
- 7: Befestigungsflansch
- 8: Verbindungsstück
- 8', 8'': Teil
- 9, 9', 9'', 9''': Fußelement
- 10: Standelement
- 11, 12: Klemmabschnitt
- 13: Rand
- 14: Flansch
- 15: Bohrung
- 16: Schraube
- 17: Rand
- 18: Randbereich
- 19: Abwinklung
- 20: Querstrebe
- 21, 22: Länge
- 23: Fußelement
- 24: Schraube
- 25, 26, 27: Länge
- 28: Querstrebe

## Patentansprüche

1. Transporteur für Flaschen oder dergl. Behälter, mit wenigstens einem mindestens einen Rahmen (2, 2a, 2b, 2c, 2d) und wenigstens ein Transportband aufweisenden Transportelement, mit am Rahmen vorgesehenen Füßen (4, 4a, 4b, 4c, 4d, 4e, 4f, 4g) sowie mit die Füße mit dem Rahmen verbindenden Verbindungsstücken (8), an denen die Füße befestigt sind und die unter Verwendung von Spannmitteln (16) mit ersten Klemmabschnitten (11) durch Festklemmen jeweils an einer Länge eines Metall-Profils (Profillänge) des Rahmens durch Festklemmen gehalten sind, so daß die Füße über eine Unterseite des Rahmen wegstehen (Gebrauchsstellung), wobei
der Rahmen (2 - 2d) im Bereich der Füße (4 - 4g) jeweils ein von der Profillänge gebildetes und senkrecht zur Längserstreckung des Transporteurs angeordnetes Querstück (6 -6d) aufweist, an dem das jeweilige Verbindungsstück derart angreift, daß nach dem Lösen der Spannmittel (16) der betreffende Fuß (4 - 4g) um die Achse des Querstückes schwenkbar ist,
dadurch gekennzeichnet, daß jedes Verbindungsstück (8) zweistückig ausgebildet ist,
wobei die beiden Teile (8', 8'') des Verbindungsstücks (8) an einem Rand (17) dieses Verbindungsstücks durch formschlüssig ineinandergreifende Verbindungsmittel (18, 19) lösbar miteinander verbunden sind und/oder schwenkbar miteinander verbunden sind, und zwar um eine Achse parallel zu dem Rand (17).

2. Transporteur nach Anspruch 1, dadurch gekennzeichnet, daß sich der Rand (17) an den ersten Klemmabschnitten (11) und parallel zu der ersten Achse (A1) erstreckt.

3. Transporteur nach einem der Ansprüche 1 - 2, dadurch gekennzeichnet, daß jedes Verbindungsstück (8) beidseitig vom ersten oder zweiten Klemmabschnitt (11, 12) einen Flansch (14) bildet, und daß die Spannmittel von an den Flanschen (14) angreifenden Schrauben (16) gebildet sind, wobei vorzugsweise die Flansche (14) an der den Verbindungsmitteln (18, 19) gegenüberliegenden Seite des ersten Klemmabschnittes (11) vorgesehen sind.

4. Transporteur nach einem der Ansprüche 1 - 3, dadurch gekennzeichnet, daß die Profillängen einen kreisförmigen Außenquerschnitt aufweisen, vorzugsweise Längen eines Rohrprofils sind.

5. Transporteur nach einem der Ansprüche 1 - 4, dadurch gekennzeichnet, daß bei vertikale Lasten übertragenden Verbindungen die erste Achse (A1) des dortigen Verbindungsstücks (8) eine horizontale oder im wesentlichen horizontale und die zweite Achse (A2) des Verbindungsstücks (8) eine vertikale oder im wesentlichen vertikale Achse sind, und daß das von den zweiten Klemmabschnitten (12) umschlossene Ende der zweiten Profillänge gegen die von den ersten Klemmabschnitten (11) umschlossene erste Profillänge anliegt.

6. Transporteur nach Anspruch 1 - 5, dadurch gekennzeichnet, daß das wenigstens eine Verbindungsstück (8) am Querstück (6, 6a, 6d, 6e) zwischen zwei Befestigungslaschen (5) angreift, mit denen das Querstück an wenigstens einem Rahmenelement des Rahmens (2, 2a, 2d) gehalten ist.

7. Transporteur nach einem der Ansprüche 1 - 6, dadurch gekennzeichnet, daß das wenigstens eine Verbindungsstück (8) an einem Fortsatz (22) des Querstücks (6b, 6d) angreift, der seitlich über eine Befestigungslasche (5) wegsteht, über die das Querstück mit wenigstens einem Rahmenelement des Rahmens (2b, 2d) verbunden ist.

8. Transporteur nach einem der Ansprüche 1 - 7, dadurch gekennzeichnet, daß der Fuß (4) wenigstens ein vertikales, von einer Profillänge gebildetes Fußelement (9) aufweist.

9. Transporteur nach einem der Ansprüche 1 - 8, dadurch gekennzeichnet, daß der Fuß (4a - 4g) wenigstens zwei vertikale Fußelemente (9, 9', 9'', 9''') aus jeweils einer Profillänge sowie wenigstens ein weiteres, ebenfalls von einer Profillänge gebildetes und die beiden Fußelemente (9, 9', 9'', 9''') verbindendes Element aufweist, und daß die Verbindungen zwischen diesem Element und den Fußelementen (9, 9', 9'', 9''') ebenfalls von Verbindungsstücken (8) gebildet sind.

10. Transporteur nach einem der Ansprüche 1 - 9, dadurch gekennzeichnet, daß am Fuß (4c, 4e, 4f, 4g) auf gleichem und/oder auf unterschiedlichem Niveau mehrere Transportelemente befestigt sind.

11. Transporteur nach einem der Ansprüche 1 - 10, dadurch gekennzeichnet, daß der wenigstens eine Fuß (4a - 4g) aus einer Vielzahl von Längen des Profils besteht, und daß sämtliche Verbindungen zwischen zwei senkrecht aneinander anschließenden Profillängen von jeweils einem Verbindungsstück (8) gebildet sind.

12. Transporteur nach einem der Ansprüche 1 - 11, dadurch gekennzeichnet, daß die Profillängen zumindest teilweise mit Befestigungsflanschen (7) versehen sind, wobei vorzugsweise zumindest die das Querstück (6 - 6d) des Rahmens (2 -2d) bildenden Profillängen mit jeweils einem Befestigungsflansch (7) versehen sind.

13. Transporteur nach einem der Ansprüche 1 - 12, dadurch gekennzeichnet, daß die Verbindungsstücke (8) aus Edelstahlblech bestehen.

14. Transporteur nach einem der Ansprüche 3 - 13, dadurch gekennzeichnet, daß an einem Teil (8', 8'') jedes Verbindungsstücks (8) Muttergewindestücke für die die Spannmittel bildenden Schrauben (16) vorgesehen sind.

15. Verbindungsstück zur Verwendung bei einem Transporteur nach einem der Ansprüche 1 - 14, dadurch gekennzeichnet, daß die beiden Teile (8', 8'') jedes Verbindungsstücks an einem Rand (17) dieses Verbindungsstücks durch formschlüssig ineinandergreifende Verbindungsmittel (18, 19) lösbar und/oder schwenkbar um eine Achse parallel zu diesem Rand (17) miteinander verbunden sind.

16. Verbindungsstück nach Anspruch 15, dadurch gekennzeichnet, daß sich der Rand (17) an den ersten Klemmabschnitten (11) und parallel zu der ersten Achse (A1) erstreckt.

17. Verbindunsstück nach einem der Ansprüche 15, 16, dadurch gekennzeichnet, daß jedes Verbindungsstück (8) beidseitig vom ersten oder zweiten Klemmabschnitt (11, 12) einen Flansch (14) bildet, und daß die Spannmittel von an den Flanschen (14) angreifenden Schrauben (16) gebildet sind, wobei vorzugsweise die Flansche (14) an der den Verbindungsmitteln (18, 19) gegenüberliegenden Seite des ersten Klemmabschnittes (11) vorgesehen sind.

18. Verbindungsstück nach einem der Ansprüche 15 - 17, dadurch gekennzeichnet, daß an einem der Teile (8', 8'') Muttergewindestücke für die die Spannmittel bildenden Schrauben (16) vorgesehen sind.

## Claims

1. Transport means for bottles or similar containers, including at least one transport element comprised of at least one frame (2, 2a, 2b, 2c, 2d) and at least one transport conveyor, said transport means also including base portions (4, 4a, 4b, 4c, 4d, 4e, 4f, 4g) respectively connected to said at least one frame (2-2d) by at least one connector (8) having first clamping portions (11) that via tightening means (16) are clamped onto a length of a profiled member of said at least one frame (2 - 2 d) such that in a position of use said base portions (4 - 4 g) project beyond an underside of said frame (2 - 2 d), wherein each frame (2 - 2 d), in the vicinity of said base portions (4 - 4 g), is provided with a transverse member (6 - 6 d) that forms said length of a profiled member and is disposed at a right angle to a longitudinal direction of said transport means, with said at least one connector (8) that connects a respective one of said base portions (4 - 4 g) to said frame (2 - 2 d) engaging said transverse member (6 - 6 d) such that loosening of said tightening means (16) allows said base portion (4 - 4 g) to pivot about an axis of said transverse member (6 - 6 d), with said connector (8) comprising two parts, wherein said two parts (8', 8 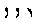 ) of said connector (8) are detachably interconnected at an edge of said connector via positively interconnected connecting means (18, 19) and wherein said two parts (8', 8 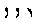 ) are interconnected by said connecting means (18, 19) so as to be pivotable about an axis that extends parallel to said edge (17) of said connector (8).

2. Transport means according to claim 1, wherein said edge (17) is disposed on said first clamping portions (11) and extends parallel to said first axis (A1).

3. Transport means according to one of the preceding claims 1 and 2, wherein each connector (8) on each side of said first and second clamping portions (11, 12), is provided with a respective flange (14), and wherein said tightening means are formed by bolts that engage said flanges and wherein said flanges (14) preferably are provided on the side of the first clamping portion (11) opposite the connecting means (18, 19).

4. Transport means according to one the preceding claims 1 to 3, wherein said lengths of a profiled member have a circular outer cross-sectional configuration, preferably being lengths of a tubular profiled member.

5. Transport means according to one of the preceding claims 1 to 4, wherein for connections that are to transmit vertical loads, said first axis (A1) of a connector (8) at that location extends at least essentially horizontally, and said second axis (A2) of said connector (8) extends at least essentially vertically, and wherein an end of said second length of a profiled member about which extend said second clamping portions (12) rests against said first length of a profiled member about which extend said first clamping portions (11).

6. Transport means according to claim 1 to 5, wherein said at least one connector (8) engages said transverse member (6, 6a, 6d, 6e) between two mounting plates (5) via which said transverse member is held on at least one element of said frame (2, 2a, 2d).

7. Transport means according to the preceding claims 1 to 6, wherein said at least one connector (8) engages an extension (22) of said transverse member (6b, 6d) that projects to the side beyond a mounting plate (5) via which said transverse member is connected to at least one element of said frame (2b, 2d).

8. Transport means according to the preceding claims 1 to 7, wherein a said base portion (4) is provided with at least one vertical base element (9) that is formed from a length of a profiled member.

9. Transport means according to the preceding claims 1 to 8, wherein said base portion (4a - 4g) is provided with at least two vertical base elements (9, 9', 9'', 9 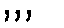 ), each of which comprises a length of a profiled member, and is furthermore provided with a further element that is also formed from a length of a profiled member and connects said at least two base elements (9 - 9'''), and wherein further connectors (8) are provided for effecting said connections between said further element and said base elements (9-9''').

10. Transport means according to one of the preceding claims 1 to 9, wherein a plurality of transport elements are secured to said base portion (4c, 4e, 4f, 4g) at the same and/or at different levels.

11. Transport means according to one of the preceding claims 1 to 10, wherein said base portions (4a - 4g) comprise a plurality of lengths of a profiled member, and wherein all connections between two lengths of a profiled member that vertically follow one another are formed by respective connectors (8).

12. Transport means according to one of the preceding claims 1 to 11, wherein said lengths of a profiled member are at least partially provided with attachment flanges (7), wherein at least said lengths of a profiled member that form said transverse member (6 - 6d) of said frame (2 - 2d) are respectively provided with an attachment flange (7).

13. Transport means according to one of the preceding claims 1 to 12, wherein the connectors (8) consist of refined steel plate.

14. Transport means according to one of the preceding claims 3 to 13, wherein one of said parts (8', 8'') of each of said connectors (8) is provided with an internally threaded portion for said tightening means (16), which are in the form of bolts.

15. Connector for the use with a transport means according to one of the preceding claims 1 to 14, wherein the two parts (8', 8 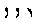 ) of each connector are interconnected at the edge (17) of this connector by engaging connecting means (18, 19); these parts are detachable and pivot about an axis parallel to this edge (17).

16. Connector according to claim 15, wherein said edge (17) is provided on said first clamping portions (11) and extends parallel to said first axis (A1).

17. Connector according to one of the preceding claims 15, 16, wherein on each side of said first and second clamping portions (11, 12) said connector (8) is provided with a flange (14), and wherein said tightening means (16) are formed by bolts that engage said flanges (14) and wherein said flanges (14) are provided on a side of said first clamping portion (11) that is remote from said connecting means (18, 19).

18. Connector according to one of the preceding claims 15 to 17, wherein the one of said parts (8', 8'') thereof is provided with internally threaded portions for said tightening means (16), which are in the form of bolts.

## Revendications

1. Transporteur pour bouteilles ou récipients similaires, avec au moins un élément de transport comportant au moins un cadre (2, 2a, 2b, 2c, 2d) et au moins une bande de transport, avec des pieds (4, 4a, 4b, 4c, 4d, 4e, 4f, 4g), prévus sur le cadre, ainsi qu'avec des pièces de liaison (8), reliant les pieds au cadre, sur lesquelles sont fixés les pieds et qui sont maintenues par serrage bloquées chacune sur une longueur d'un profilé métallique (longueur profilée) du cadre, par utilisation de moyens de serrage (16) avec des premières portions de serrage (11), de sorte que les pieds dépassent d'une face inférieure du cadre (position d'utilisation), dans lequel le cadre (2 à 2d) présente, dans la zone des pieds (4 à 4g), une pièce transversale (6 à 6d) formée par la longueur profilée et disposée perpendiculairement à l'extension longitudinale du transporteur, sur laquelle la pièce de liaison respective agit de manière qu'après desserrage des moyens de serrage (16), le pied (4 à 4g) concerné peut pivoter autour de l'axe de la pièce transversale,
caractérisé en ce que chaque pièce de liaison (8) est en deux parties, les deux parties (8', 8'') de la pièce de liaison (8) étant reliées entre elles de manière amovible sur un bord (17) de cette pièce de liaison, par des moyens de liaison (18, 19) s'engageant l'un dans l'autre par concordance de forme et/ou étant reliées entre elles de manière à pouvoir pivoter, et ce autour d'un axe parallèle au bord (17).

2. Transporteur selon la revendication 1, caractérisé en ce que le bord (17) s'étend sur les premières portions de serrage (11) et parallèlement au premier axe (A1).

3. Transporteur selon l'une des revendications 1, 2, caractérisé en ce que chaque pièce de liaison (8) forme, des deux côtés de la première ou de la deuxième portion de serrage (11, 12), une bride (14) et en ce que les moyens de serrage sont formés par des vis (16) agissant sur les brides (14), les brides (14) étant prévues de préférence sur le côté faisant face aux moyens de liaison (18, 19), de la première portion de serrage (11).

4. Transporteur selon l'une des revendications 1 à 3, caractérisé en ce que les longueurs profilées présentent une section transversale extérieure circulaire, et sont de préférence des longueurs d'un profilé tubulaire.

5. Transporteur selon l'une des revendications 1 à 4, caractérisé en ce que dans le cas de liaisons transmettant des charges verticales, le premier axe (A1) de la pièce de liaison (8), se trouvant à cet endroit, est un axe horizontal ou sensiblement horizontal et le deuxième axe (A2) de la pièce de liaison (8), est un axe vertical ou sensiblement vertical, et en ce que l'extrémité, enfermée par les deuxièmes portions de serrage (12), de la deuxième longueur profilée, s'applique contre la première longueur profilée, enfermée par les premières portions de serrage (11).

6. Transporteur selon les revendications 1 à 5, caractérisé en ce que la ou chaque pièce de liaison (8) agit sur la pièce transversale (6, 6a, 6d, 6e), entre deux pattes de fixation (5), par lesquelles la pièce transversale est maintenue sur au moins un élément du cadre (2, 2a, 2d).

7. Transporteur selon l'une des revendications 1 à 6, caractérisé en ce que la ou chaque pièce de liaison (8) agit sur un prolongement (22) de la pièce transversale (6b, 6d), qui dépasse latéralement d'une patte de fixation (5), par laquelle la pièce transversale est reliée avec au moins un élément du cadre (2b, 2d).

8. Transporteur selon l'une des revendications 1 à 7, caractérisé en ce que le pied (4) présente au moins un élément de pied (9) vertical, formé par une longueur profilée.

9. Transporteur selon l'une des revendications 1 à 8, caractérisé en ce que le pied (4a à 4g) présente au moins deux éléments de pied verticaux (9, 9', 9'', 9''') faits chacun d'une longueur profilée ainsi qu'au moins un autre élément, formé également par une longueur profilée et reliant les deux éléments de pied (9, 9', 9'', 9'''), et en ce que les liaisons entre cet élément et les éléments de pied (9, 9', 9'', 9''') sont formées également par des pièces de liaison (8).

10. Transporteur selon l'une des revendications 1 à 9, caractérisé en ce que plusieurs éléments de transporteur sont fixés sur le pied (4c, 4e, 4f, 4g), au même niveau et/ou à un niveau différent.

11. Transporteur selon l'une des revendications 1 à 10, caractérisé en ce que le ou chaque pied (4a à 4g) est constitué d'un grand nombre de longueurs du profilé, et en ce que toutes les liaisons sont formées entre deux longueurs profilées, se rattachant perpendiculairement l'une à l'autre, d'une pièce de liaison (8).

12. Transporteur selon l'une des revendications 1 à 11, caractérisé en ce que les longueurs profilées sont pourvues au moins partiellement de brides de fixation (7), au moins les longueurs profilées, formant la pièce transversale (6 à 6d) du cadre (2a à 2d), étant pourvues chacune d'une bride de fixation (7).

13. Transporteur selon l'une des revendications 1 à 12, caractérisé en ce que les pièces de liaison (8) sont faites d'une tôle d'acier spéciale.

14. Transporteur selon l'une des revendications 3 à 13, caractérisé en ce que sur une partie (8', 8'') de chaque pièce de liaison (8) sont prévues des pièces à filet femelles pour les vis (16), formant les moyens de serrage.

15. Pièce de liaison à utiliser dans un transporteur selon l'une des revendications 1 à 14, caractérisée en ce que les deux parties (8', 8'') de chaque pièce de liaison sont reliées entre elles de manière amovible sur un bord (17) de cette pièce de liaison par des moyens de liaison (18, 19), s'engageant l'un dans l'autre par concordance de forme et/ou sont reliées entre elles de manière à pouvoir pivoter autour d'un axe parallèle à ce bord (17).

16. Pièce de liaison selon la revendication 15, caractérisée en ce que le bord (17) s'étend sur les premières portions de serrage (11) et parallèlement au premier axe (A1).

17. Pièce de liaison selon l'une des revendications 15, 16, caractérisée en ce que chaque pièce de liaison (8) forme, des deux côtés de la première ou de la deuxième portion de serrage (11, 12), une bride (14), et en ce que les moyens de serrage sont formés par des vis (16), agissant sur les brides (14), les brides (14) étant prévues de préférence sur le côté opposé aux moyens de liaison (18, 19), de la première portion de serrage (11).

18. Pièce de liaison selon l'une des revendications 15 à 17, caractérisée en ce que sur l'une des parties (8', 8'') sont prévues des pièces à filetage femelle pour les vis (16) formant les moyens de serrage.
